# EUROPEAN PATENT APPLICATION

(11) **EP 2 922 004 A1**
(43) Date of publication of application: **23.09.2015**
(21) Application number: 15158305.1
(22) Date of filing: 09.03.2015
(51) Int. Cl.: G06Q 10/10

(54) **METHOD FOR CREATING GROUP, METHOD FOR EXITING FROM GROUP AND APPARATUS**

(30) Priority: 20.03.2014 CN 201410105101
(71) Applicant: Xiaomi Inc., Beijing 100085 (CN)
(72) Inventor: Liu, Guoming, 100085 Beijing (CN); Zhang, Xibei, 100085 Beijing (CN); Zhang, Weiliang, 100085 Beijing (CN)
(74) Representative: Sadler, Peter Frederick

(57) **Abstract**

The present disclosure discloses a method for creating a group, a method for exiting from a group and an apparatus, and belongs to the technical field of instant messaging. The method for creating a group includes: receiving a creating request for creating a target subgroup in which a group identifier of a target group which a client sending the creating request belongs to is carried; creating a target subgroup associated with the target group; and sending a subgroup identifier of the target subgroup to members of the target subgroup; wherein the members of the target subgroup constitute a subset of members of the target group. Thus, the problem in related technologies that the newly created group may include other members who do not belong to the target group, and thereby the server resource is wasted, is solved. Consequently, effects of saving the server resource may be achieved.

## Description

### TECHNICAL FIELD

The present disclosure relates to the technical field of instant messaging, and more particularly, to a method for creating a group, a method for exiting from a group and an apparatus.

### BACKGROUND

Group function is a common and important function in instant messaging applications. In practical usage, a user in a group may send communication information to a server which the instant messaging application corresponds to, the server forwards the received communication information to other users in this group, and thereby all the users in this group may obtain the communication information sent from this user.

However, in some application scenarios, a user may only need to communicate with a portion of users in a group. For example, when a host wants to discuss with several managers about whether to remove a member from the group, the host may only need to communicate with these managers, and need not communicate with all members in this group. Under such condition, the user may request to create a new group in which members whom the user needs to communicate with are included in order to realize such function.

During the procedure of devising the present disclosure, the inventors of the present disclosure have found that at least the following defects exist in related technologies.

After the user creates a new group, since each member in the group may invite any user in his or her friends list to join this new group, the newly created group may include users that are not included in the initial group. Since the new group is created for the purpose of discussing some issues in the initial group, the communication information in the newly created group are of no value to such users, and it is a waste of server resource for the server to forward the communication information in the new group to such users.

### SUMMARY

The invention is defined in the independent claims to which reference is now directed. Optional features are set out in the dependent claims. In order to solve the problem of wasting of server resources in related technologies, the present disclosure provides a method for creating a group, a method for exiting from a group and an apparatus.

According to a first aspect of embodiments of the present disclosure, a method for creating a group is provided. The method is applied in a server and includes:
receiving a creating request for creating a target subgroup, the creating request including a group identifier of a target group which a client sending the creating request belongs to;
creating a target subgroup associated with the target group; and
sending a subgroup identifier of the target subgroup to members of the target subgroup;
wherein the members of the target subgroup constitute a subset of members of the target group.

Optionally, creating a target subgroup associated with the target group includes:
obtaining a member list carried in the creating request, the member list of the target subgroup including the client sending the creating request; and
creating the target subgroup corresponding to the member list.
Optionally, the method further includes:
receiving a joining request for joining clients in the target group into the target subgroup; and
joining the clients in the target group into the target subgroup.

Optionally, the method further includes:
receiving communication information sent from the members of the target subgroup, the communication information including the subgroup identifier of the target subgroup;
searching for a corresponding member list of the target subgroup according to the subgroup identifier of the target subgroup; and
forwarding the communication information to other members in the member list of the target subgroup than the member sending the communication information.

According to a second aspect of embodiments of the present disclosure, a method for creating a group is provided. The method is applied in a client and includes:
sending a creating request for creating a target subgroup to a server, the creating request including a group identifier of a target group; and
receiving a subgroup identifier of the target subgroup sent from the server;
wherein the target subgroup is associated with the target group which the client belongs to, and members of the target subgroup constitute a subset of members of the target group.

According to a third aspect of embodiments of the present disclosure, a method for exiting from a group is provided. The method is applied in a server and includes:
receiving an exit request for exiting from a target subgroup in which a subgroup identifier of the target subgroup is included;
searching for a corresponding member list of the target subgroup according to the subgroup identifier of the target subgroup; and
deleting a client sending the exit request from the member list of the target subgroup;
wherein the target subgroup is associated with a target group, and members of the target subgroup constitute a subset of members of the target group.

Optionally, the method further includes:
determining whether the client sending the exit request is a creator of the target subgroup;
if the client sending the exit request is a creator of the target subgroup, collapsing the target subgroup; and
if the client sending the exit request is not a creator of the target subgroup, performing a step of deleting the client sending the exit request from the member list of the target subgroup.

According to a fourth aspect of embodiments of the present disclosure, a method for exiting from a group is provided. The method is applied in a server and includes:
receiving an exit request for exiting from a target group in which a group identifier of the target group is included;
searching for a subgroup identifier associated with the group identifier, members of a subgroup which the searched for subgroup identifier corresponds to constituting a subset of members of the target group;
searching for a corresponding member list of the target group according to the group identifier;
deleting a client sending the exit request from the member list of the target group;
searching for a corresponding member list of a subgroup according to the searched for subgroup identifier; and
deleting the client from the searched for member list of the subgroup.

Optionally, the method further includes:
determining whether the client sending the exit request is a creator of the target group;
if the client sending the exit request is a creator of the target group, collapsing the target group and a subgroup associated with the target group; and
if the client sending the exit request is not a creator of the target group, performing a step of deleting the client sending the exit request from the member list of the target group.

Optionally, the method further includes:
for each subgroup identifier of the searched for subgroup identifiers, determining whether the client sending the exit request is a creator of a subgroup which the subgroup identifier corresponds to;
if the client sending the exit request is a creator of a subgroup which the subgroup identifier corresponds to, collapsing the subgroup which the subgroup identifier corresponds to; and
if the client sending the exit request is not a creator of a subgroup which the subgroup identifier corresponds to, performing a step of deleting the client from the searched for member list of the subgroup.

According to a fifth aspect of embodiment of the present disclosure, an apparatus for creating a group is provided. The apparatus is applied in a server and includes:
a creating request receiving module configured to receive a creating request for creating a target subgroup in which a group identifier of a target group which a client sending the creating request belongs to is carried;
a subgroup creating module configured to create a target subgroup associated with the target group; and
an identifier sending module configured to send a subgroup identifier of the target subgroup to members of the target subgroup;
wherein the members of the target subgroup constitute a subset of members of the target group.

Optionally, the subgroup creating module includes:
a member list obtaining unit configured to obtain a member list carried in the creating request, the member list of the target subgroup including the client sending the creating request; and
a subgroup creating unit configured to create the target subgroup corresponding to the member list.

Optionally, the apparatus further includes:
a joining request receiving module configured to receive a joining request for joining clients in the target group into the target subgroup; and
a client joining module configured to join the clients in the target group into the target subgroup.

Optionally, the apparatus further includes:
an information receiving module configured to receive communication information sent from the members of the target subgroup, the communication information including the subgroup identifier of the target subgroup;
a member list searching module configured to search for a corresponding member list of the target subgroup according to the subgroup identifier of the target subgroup; and
an information forwarding module configured to forward the communication information to other members in the member list of the target subgroup searched for by the member list searching module than the member sending the communication information.

According to a sixth aspect of embodiments of the present disclosure, an apparatus for creating a group is provided. The apparatus is applied in a client and includes:
a request sending module configured to send a creating request for creating a target subgroup, in which a group identifier of a target group is carried, to a server; and
an identifier receiving module configured to receive a subgroup identifier of the target subgroup sent from the server;
wherein the target subgroup is associated with the target group which the client belongs to, and members of the target subgroup constitute a subset of members of the target group.

According to a seventh aspect of embodiments of the present disclosure, an apparatus for exiting from a group is provided. The apparatus is applied in a server and includes:
a request receiving module configured to receive an exit request for exiting from a target subgroup in which a subgroup identifier of the target subgroup is included;
a member list searching module configured to search for a corresponding member list of the target subgroup according to the subgroup identifier of the target subgroup; and
a client deleting module configured to delete a client sending the exit request from the member list of the target subgroup;
wherein the target subgroup is associated with a target group, and members of the target subgroup constitute a subset of members of the target group.

Optionally, the apparatus includes:
a client determining module configured to determine whether the client sending the exit request is a creator of the target subgroup; and
a subgroup collapsing module configured to collapse the target subgroup when it is determined that the client sending the exit request is a creator of the target subgroup;
wherein the client deleting module is configured to perform a step of deleting the client sending the exit request from the member list of the target subgroup, when it is determined that the client sending the exit request is not a creator of the target subgroup.

According to an eighth aspect of embodiments of the present disclosure, an apparatus for exiting from a group is provided. The apparatus is applied in a server and includes:
an exit request receiving module configured to receive an exit request for exiting from a target group in which a group identifier of the target group is included;
a subgroup identifier searching module configured to search for a subgroup identifier associated with the group identifier, members of a subgroup which the searched for subgroup identifier corresponds to constituting a subset of members of the target group;
a first list searching module configured to search for a corresponding member list of the target group according to the group identifier;
a first deleting module configured to delete a client sending the exit request from the member list of the target group;
a second list searching module configured to search for a corresponding member list of a subgroup according to the searched for subgroup identifier; and
a second deleting module configured to delete the client from the searched for member list of the subgroup.

Optionally, the apparatus further includes:
a first determining module configured to determine whether the client sending the exit request is a creator of the target group; and
a group collapsing module configured to collapse the target group and a subgroup associated with the target group, when it is determined that the client sending the exit request is a creator of the target group;
wherein the first deleting module is configured to perform a step of deleting the client sending the exit request from the member list of the target group, when it is determined that the client sending the exit request is not a creator of the target group.

Optionally, the apparatus further includes:
a second determining module configured to, for each subgroup identifier of the searched for subgroup identifiers, determine whether the client sending the exit request is a creator of a subgroup which the subgroup identifier corresponds to; and
a subgroup collapsing module configured to collapse the subgroup which the subgroup identifier corresponds to, when it is determined that the client sending the exit request is a creator of a subgroup which the subgroup identifier corresponds to;
wherein the second deleting module is configured to perform a step of deleting the client from the searched for member list of the subgroup, when it is determined that the client sending the exit request is not a creator of a subgroup which the subgroup identifier corresponds to.

According to a ninth aspect of embodiments of the present disclosure, there is provided a computer program which, when executed on a processor of an apparatus, performs any one of the above methods.

The technical solutions provided by embodiments of the present disclosure may include the following advantageous effects.

By receiving a creating request for creating a target subgroup in which a group identifier of a target group which a client sending the creating request belongs to is carried, a target subgroup associated with the target group is created; a subgroup identifier of the target subgroup is sent to members of the target subgroup. The members of the target subgroup constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a diagram showing an implementation environment involved in a method for managing a group according to a part of exemplary embodiments;
Fig. 2 is a flowchart showing a method for creating a group according to an exemplary embodiment;
Fig. 3 is a flowchart showing a method for creating a group according to another exemplary embodiment;
Fig. 4A is a flowchart showing a method for creating a group according to a further exemplary embodiment;
Fig. 4B is a display diagram when a second client requests to create a subgroup according to a further exemplary embodiment;
Fig. 4C is another display diagram when the second client requests to create a subgroup according to a further exemplary embodiment;
Fig. 4D is a display diagram when the second client has successfully created the subgroup according to a further exemplary embodiment;
Fig. 4E is a display diagram of an inquiry interface displayed when the second client confirms to create the subgroup according to a further exemplary embodiment;
Fig. 4F is a flowchart showing another method for creating a group according to a further exemplary embodiment;
Fig. 4G is a flowchart showing another method for creating a group according to a further exemplary embodiment;
Fig. 4H is a display diagram when a third client initiates a group chat in a target subgroup according to further exemplary embodiment;
Fig. 5 is a flowchart showing a method for exiting from a group according to an exemplary embodiment;
Fig. 6 is a flowchart showing a method for exiting from a group according to another exemplary embodiment;
Fig. 7 is a flowchart showing a method for exiting from a group according to an exemplary embodiment;
Fig. 8 is a flowchart showing a method for exiting from a group according to another exemplary embodiment;
Fig. 9 is a block diagram showing an apparatus for creating a group according to an exemplary embodiment;
Fig. 10A is a block diagram showing an apparatus for creating a group according to another exemplary embodiment;
Fig. 10B is a block diagram showing another apparatus for creating a group according to another exemplary embodiment;
Fig. 11 is a block diagram showing an apparatus for creating a group according to a further exemplary embodiment;
Fig. 12 is a block diagram showing an apparatus for exiting from a group according to an exemplary embodiment;
Fig. 13 is a block diagram showing an apparatus for exiting from a group according to another exemplary embodiment;
Fig. 14 is a block diagram showing an apparatus for exiting from a group according to an exemplary embodiment;
Fig. 15 is a block diagram showing an apparatus for exiting from a group according to another exemplary embodiment;
Fig. 16 is a block diagram showing a server according to an exemplary embodiment; and
Fig. 17 is a block diagram showing a terminal according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

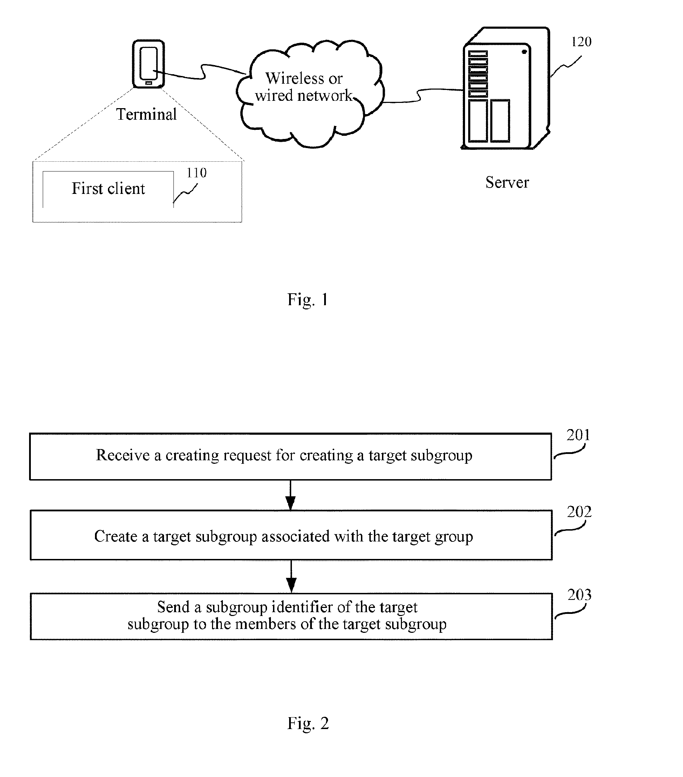

Fig. 1 is a diagram showing an implementation environment involved in a method for managing a group according to a part of exemplary embodiments. As shown in Fig. 1, the implementation environment may include a client 110 and a server 120.

The client 110 may be a client executed in a terminal and provided by a certain instant messaging service provider.

The server 120 is a server provided by the instant messaging provider of the client 110, and the server 120 may communicate with the client 110 via a wired or wireless network.

Fig. 2 is a flowchart showing a method for creating a group according to an exemplary embodiment. As shown in Fig. 2, the method for creating a group is applied in the server 120 of the implementation environment shown in Fig. 1. The method for creating a group may include the following steps.

In step 201, a creating request for creating a target subgroup is received.

A group identifier of a target group which a client sending the creating request belongs to is carried in the creating request.

In step 202, a target subgroup associated with the target group is created.

Members of the target subgroup constitute a subset of members of the target group.

In step 203, a subgroup identifier of the target subgroup is sent to the members of the target subgroup.

To sum up, in the method for creating a group provided by the present embodiment, by receiving a creating request for creating a target subgroup in which a group identifier of a target group which a client sending the creating request belongs to is carried, a target subgroup associated with the target group is created; a subgroup identifier of the target subgroup is sent to members of the target subgroup. The members of the target subgroup constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

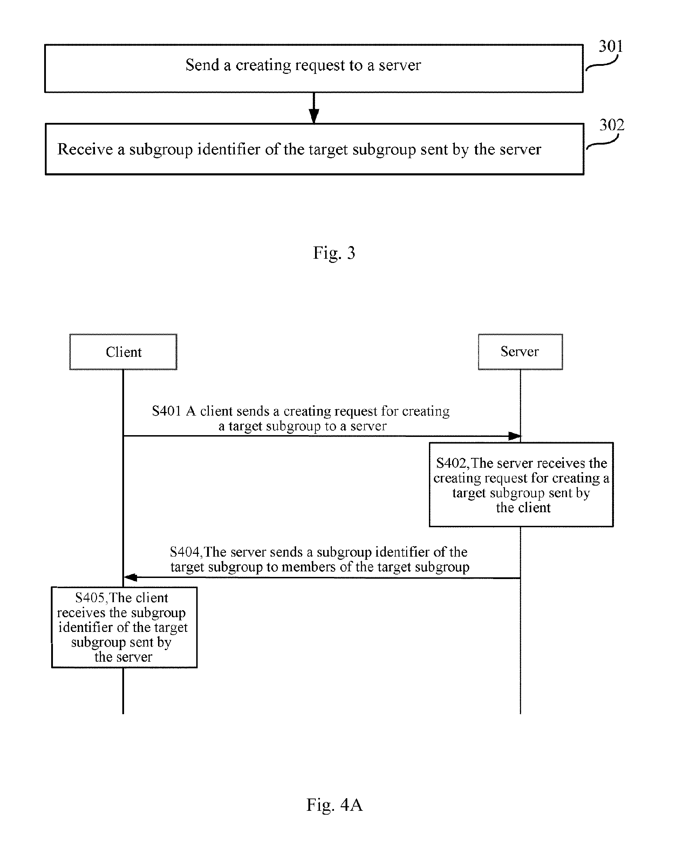

Fig. 3 is a flowchart showing a method for creating a group according to an exemplary embodiment. As shown in Fig. 3, the method for creating a group is applied in the client 110 of the implementation environment shown in Fig. 1. The method for creating a group may include the following steps.

In step 301, a creating request for creating a target subgroup is sent to a server.

A group identifier of a target group is carried in the creating request.

In step 302, a subgroup identifier of the target subgroup sent from the server is received.

The target subgroup is associated with the target group which the client belongs to, and members of the target subgroup constitute a subset of members of the target group.

To sum up, in the method for creating a group provided by the present embodiment, by sending a creating request for creating a target subgroup to a server, the server creates the target subgroup after receiving the creating request and returns the generated subgroup identifier to the client, and thereby the client may successfully create the target subgroup after receiving the subgroup identifier. The target subgroup is associated with the target group which the client belongs to, and members of the target subgroup constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

Fig. 4A is a flowchart showing a method for creating a group according to an exemplary embodiment. As shown in Fig. 4A, the method for creating a group is applied in the implementation environment shown in Fig. 1. The method for creating a group may include the following steps.

In step 401, a client sends a creating request for creating a target subgroup to a server.

When a user uses the group function, he or she may usually only need to communicate with a part of users in the group, and under such condition the user may send, via a client used by himself or herself, the creating request for creating a target subgroup to the server. A group identifier of a target group which the client sending the creating request belongs to is carried in the creating request.

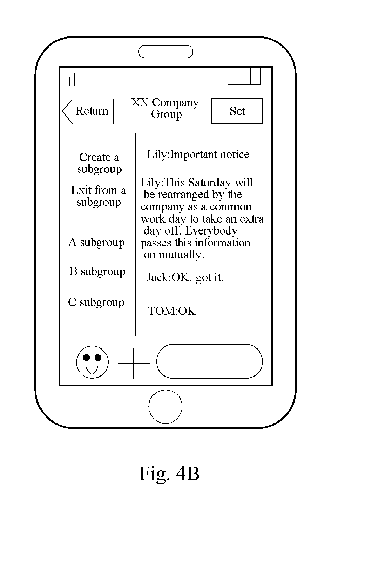

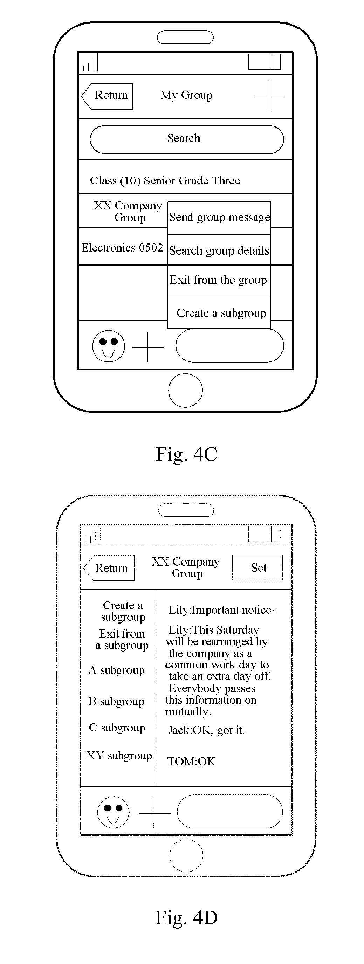

For example, referring to Fig. 4B, when a user needs to create a subgroup in a target group "XX Company Group", the user may select an option "Create a Subgroup" in an group message interface of the "XX Company Group" displayed by the client. After the client receives a selection signal, an inquiry interface for inquiring whether to confirm creation is displayed, and after selection of confirmation by the user, the client sends a creating request for creating a subgroup to the server. When in actual implementation, in the display interface which includes group names of respective groups and is displayed by the client, a user may click the group name of the target group and select to create a subgroup in selection menus displayed after the click, and request to create a target subgroup by selecting confirmation in the later displayed inquiry interface for inquiring whether to confirm creation, referring to the diagram in Fig. 4C, and the present embodiment does not impose limitations on this.

In step 402, the server receives the creating request for creating a target subgroup sent from the client.

In step 403, the server creates the target subgroup associated with the target group.

After receiving the creating request, the server may create the target subgroup associated with the target group. Members of the target subgroup constitute a subset of members of the target group. When in actual implementation, the server generates a subgroup identifier of the target subgroup while creating the target subgroup in order to indicate identity of the target subgroup created by the server, and detailed descriptions are omitted in this embodiment.

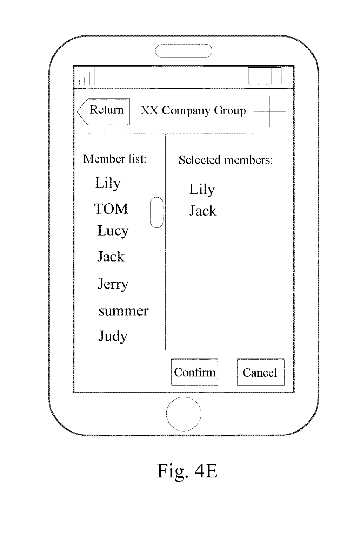

Furthermore, in order to indicate a creator of the target subgroup, the client may be carried in the creating request. Also, since the client may invite other group members in the target group to join in the target subgroup when requesting to create the target subgroup, the creating request sent from the client may carry other clients invited by this client, i.e., the creating request may carry a member list of the target subgroup. For example, after the client receives a selection signal for creating a subgroup, an inquiry interface shown in Fig. 4E is displayed, and a member list of the target group is included in the inquiry interface. The user selects other group members who need to be invited from the member list of the target group, and after confirmation by clicking, the client sends the creating request containing the group identifier, the client and the invited other clients to the server. Correspondingly, after receiving the creating request, the server may create a target subgroup corresponding to the member list.

When in actual implementation, in order to guarantee privacy of other group members, the server may firstly send invite information for inviting other group members to join in the target subgroup to other clients, and then the server creates the target subgroup corresponding to member list after other clients accept invitation and feed confirmation information back, and the present embodiment does not impose limitations on this.

In step 404, the server sends a subgroup identifier of the target subgroup to members of the target subgroup.

After creating the target subgroup, the server may send the subgroup identifier of the target subgroup to the members of the target subgroup in order to inform the members in the target subgroup that the target subgroup has been successfully created.

In step 405, the members of the target subgroup receive the subgroup identifier of the target subgroup sent from the server.

Correspondingly, the members of the target subgroup may receive the subgroup identifier of the target subgroup sent from the server. In addition, after receiving the subgroup identifier of the target subgroup, the client may store the received subgroup identifier. For example, referring to Fig. 4D, the client stores the received subgroup identifier "XY" in the target group.

It shall be noted that, the present embodiment does not impose limitations on the number of subgroups which may be created in the target group, and one client or different clients may create respective subgroups, and the present embodiment does not impose limitations on this.

To sum up, in the method for creating a group provided by the present embodiment, by receiving a creating request for creating a target subgroup in which a group identifier of a target group which a client sending the creating request belongs to is carried, a target subgroup associated with the target group is created; a subgroup identifier of the target subgroup is sent to members of the target subgroup. The members of the target subgroup constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

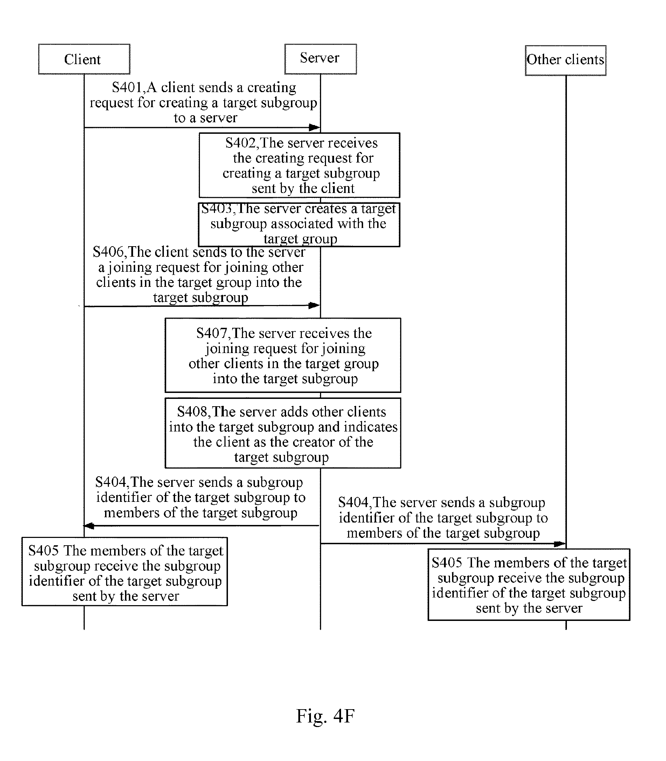

It shall be noted that the above embodiments are only illustrated by taking the example where the client invites other clients to join in the target subgroup while creating the target subgroup. Referring to Fig. 4F, when in actual implementation, the client may firstly create a subgroup, and then invite other clients in the target group to join in the target subgroup. The following steps maybe performed.

In step 406, the client sends to the server a joining request for joining other clients in the target group into the target subgroup.

After successfully creating the target subgroup, the client may invite other clients in the target group to join in the target subgroup, and under such condition the client may send to the server the joining request for requesting to join other clients in the target group into the target subgroup.

In step 407, the server receives the joining request for joining other clients in the target group into the target subgroup.

In step 408, the server adds other clients into the target subgroup and indicates the client as the creator of the target subgroup.

After receiving the joining request, the server adds other clients into the target subgroup, and the server may indicate the client as the creator of the target subgroup.

When in actual implementation, in order to guarantee privacy of other clients, the server may firstly send to other clients invite information for inviting other clients to join in the target subgroup, and then the server adds other clients into the target subgroup after other clients accept invitation and feed confirmation information back, and the present embodiment does not impose limitations on this.

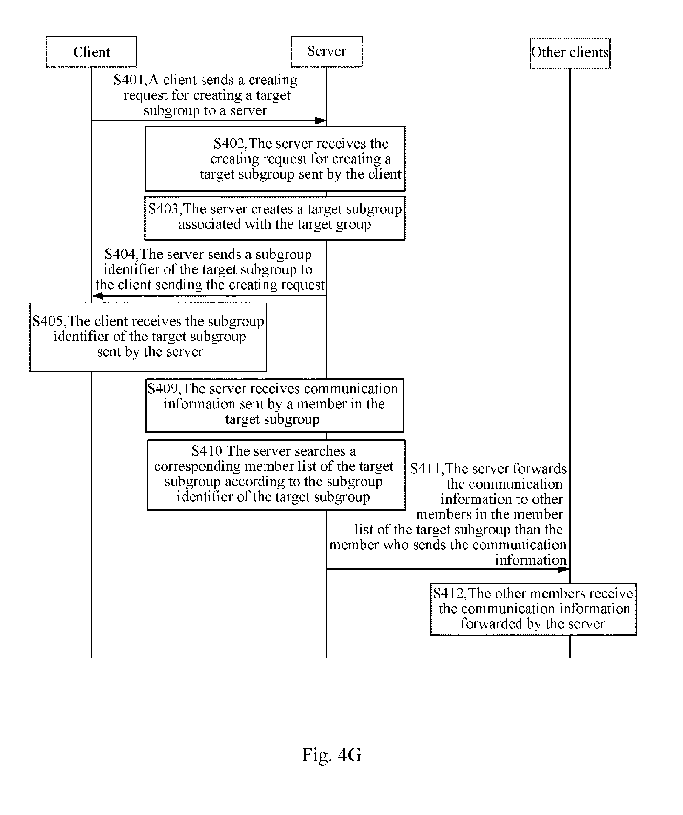

It shall be noted that after the server creates the target subgroup, any member in the target subgroup may initiate group communication. Referring to Fig. 4G, steps for initiating group communication by a member in the target subgroup may include the following steps.

In step 409, the server receives communication information sent from a member in the target subgroup.

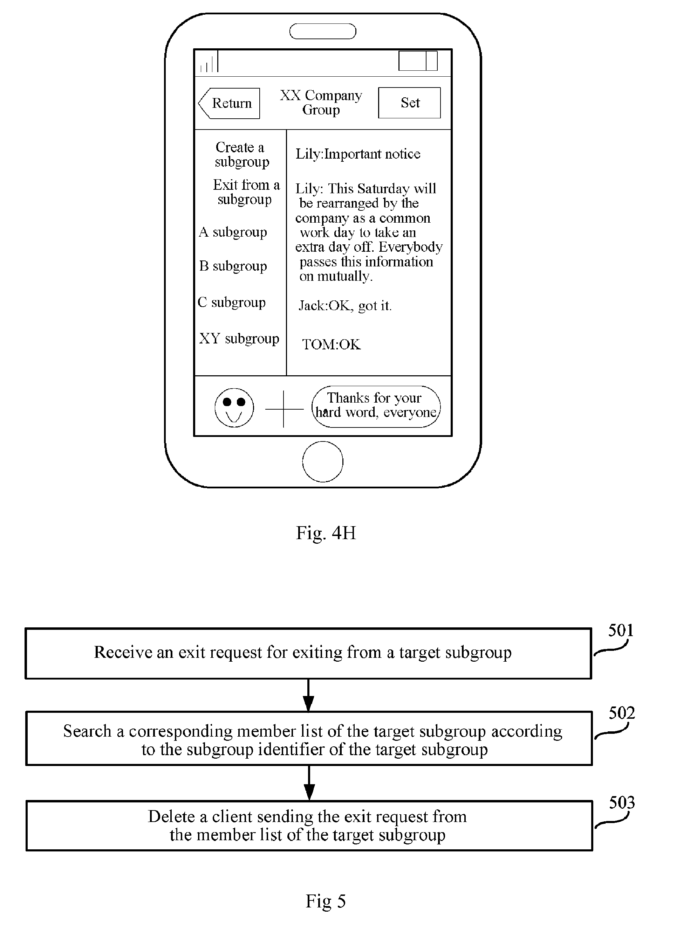

When a member in the target subgroup initiates a group chat, the member may send communication information to a server, and the corresponding server may receive the communication information sent from this member. The communication information may include a subgroup identifier of the target subgroup. When in actual implementation, the communication information may include information contents. For example, referring to Fig. 4H, the present embodiment is illustrated by taking an example where the member is the client that creates the target subgroup. When a user wants to initiate a group chat in the target subgroup "XY subgroup", the user may click "XY subgroup", and then input information with contents of "XX project has been accomplished very well. Thanks for your hard work, everyone" in an input box, and then click send option. After the client used by the member receives the click signal, the client sends communication information including "XX project has been accomplished very well. Thanks for your hard work, everyone" and "XY subgroup" to the server.

It shall be noted that, in order to indicate the sender of the communication information, the communication information may include identification of the member who sends the communication information, and the present embodiment does not impose limitations on the information contents of the communication information.

In step 410, the server searches a corresponding member list of the target subgroup according to the subgroup identifier of the target subgroup.

After receiving the communication information, in order to perform subsequent steps, the server may search a member list of the target subgroup corresponding to the subgroup identifier in the communication information.

In step 411, the server forwards the communication information to other members in the member list of the target subgroup than the member who sends the communication information.

After having searched the member list of the target subgroup, the server may forward the communication information to other members in the member list of the target subgroup than the member who sends the communication information.

In step 412, the other members receive the communication information forwarded by the server.

Other members may correspondingly receive the communication information forwarded by the server, and the information contents in the communication information may be displayed in the subgroup which the subgroup identifier corresponds to after the communication information is received. When the communication information includes the identification of the member who sends the communication information, other clients display the sender's identifier while displaying the information contents, and detailed description are omitted in the present embodiment.

It shall be noted that the creating request sent from the client may employ the same message body form as that of the group message in the target group. For example, the message body of the group message includes a sender identifier, a group identifier, a timestamp and message contents, and then the creating request may include an identifier of the client, a group identifier, a timestamp and message contents for representing request of creating a subgroup. Also, the creating request may have the same representation format as the representation format of the group message. For example, when the group message has an extensible Markup Language (XML) format, the creating request may also have an XML format; when the group message has a JavaScript Object Notation (JOSN, a lightweight data-exchange format) format, the creating request may also have a JOSN format; when the group message has a binary format, the creating request may also have a binary format.

Fig. 5 is a flowchart showing a method for exiting from a group according to an exemplary embodiment. As shown in Fig. 5, the method for exiting from a group is applied in the server 120 in the implementation environment shown in Fig. 1. The method for exiting from a group may include the following steps.

In step 501, an exit request for exiting from a target subgroup is received.

The exit request may include a subgroup identifier of a target subgroup, and the target subgroup is associated with a target group and members of the target subgroup constitute a subset of members of the target group.

In step 502, a corresponding member list of the target subgroup is searched for according to the subgroup identifier of the target subgroup.

In step 503, a client sending the exit request is deleted from the member list of the target subgroup.

To sum up, in the method for exiting form a group provided by the present embodiment, by receiving an exit request for exiting from a target subgroup, a corresponding member list of the target subgroup which the subgroup identifier of the target subgroup corresponds to is searched after the exit request is received, and a client sending the exit request is deleted from the member list of the target subgroup. The exit request includes the subgroup identifier of the target subgroup, and the target subgroup is associated with a target group and members of the target subgroup constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

Subgroup members in the target subgroup may request for exit, thereby avoiding resource consumption of the server for sending communication information to the members, and the communication information is of no value for the members, and the server resource may be further saved. Meanwhile, interference on the members by the communication information may be avoided and thereby the user experience may be improved.

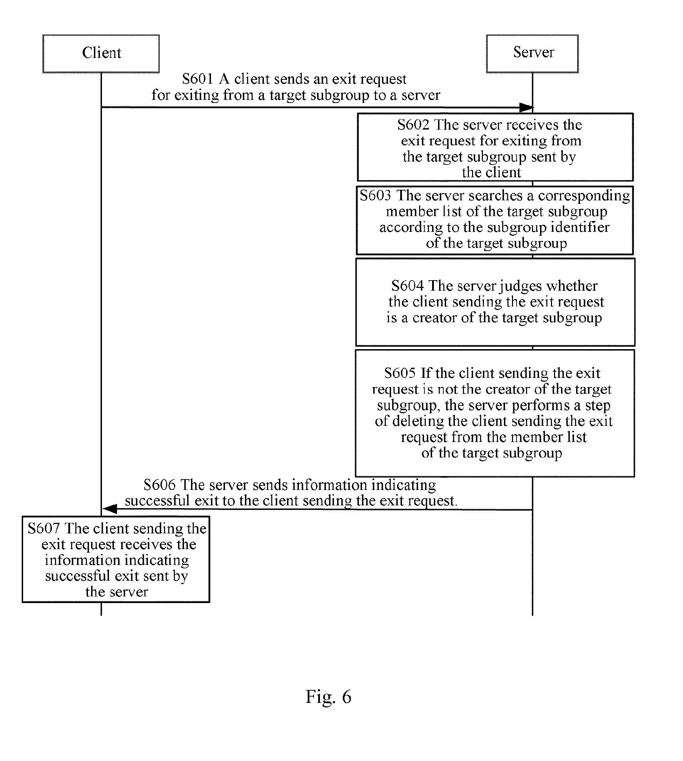

Fig. 6 is a flowchart showing a method for exiting from a group according to an exemplary embodiment. As shown in Fig. 6, the method for exiting from a group is applied in the implementation environment shown in Fig. 1. The method for exiting from a group may include the following steps.

In step 601, a client sends to a server an exit request for exiting from a target subgroup.

When a user in a target subgroup wants to exit, the user may send, by the client used by himself or herself, the exit request for exiting from the target subgroup to the server. The exit request includes a subgroup identifier of the target subgroup, the target subgroup is associated with a target group and members of the target subgroup constitute a subset of members of the target group.

In step 602, the server receives the exit request for exiting from a target subgroup.

Correspondingly, the server may receive the exit request sent from the client.

In step 603, the server searches for a corresponding member list of the target subgroup according to the subgroup identifier of the target subgroup.

In step 604, the server determines whether the client sending the exit request is a creator of the target subgroup.

After receiving the exit request, in order to perform subsequent steps, the server may determine whether the client sending the exit request is a creator of the target subgroup. When in actual implementation, in order to indicate which client in the target subgroup requests to exit, the exit request may include identification of the client sending the exit request, and thus the server may determine whether the identification of the client sending the exit request is the identification of the creator of the target subgroup in the member list of the target subgroup. When it is determined that the identification of the client sending the exit request is the identification of the creator of the target subgroup, the server may be informed that the client is the creator of the target subgroup; when it is determined that the identification of the client sending the exit request is not the identification of the creator of the target subgroup, the server may be informed that the client is not the creator of the target subgroup.

In step 605, if the client sending the exit request is not the creator of the target subgroup, the server performs a step of deleting the client sending the exit request from the member list of the target subgroup.

If it is determined that the client sending the exit request is not the creator of the target subgroup, it is indicated that the client is a normal user in the target subgroup and at this time, the server may directly delete the client from the member list of the target subgroup.

If it is determined that the client sending the exit request is the creator of the target subgroup, then in similar manner with existing groups in which a group is directly collapsed when a host of the group exits, the server directly collapses the target subgroup and then the flowchart ends.

In step 606, the server sends information indicating successful exit to the client sending the exit request.

After performing the deleting operation, in order to inform that the client sending the exit request has already successfully exited from the target subgroup, the server may send information indicating successful exit to the client sending the exit request.

In step 607, the client sending the exit request receives the information indicating successful exit sent from the server.

Correspondingly, the client sending the exit request may receive the information indicating successful exit sent from the server, and after receiving the information indicating successful exit, the client may be informed that it has already exited from the target subgroup successfully. The information indicating successful exit is information returned back by the server after the server receives the exit request and deletes the client sending the exit request from the member list of the target subgroup.

To sum up, in the method for exiting from a group provided by the present embodiment, by receiving an exit request for exiting from a target group, and searching a member list of the target subgroup which the subgroup identifier of the target subgroup corresponds to after receiving the exit request, the client sending the exit request is deleted from the member list of the target subgroup. The exit request includes the subgroup identifier of the target subgroup, the target subgroup is associated with a target group and members of the target subgroup constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

Subgroup members in the target subgroup may request for exit, thereby avoiding resource consumption of the server for sending communication information to the members, and the communication information is of no value for the members, and the server resource may be further saved. Meanwhile, interference on the members by the communication information may be avoided and thereby the user experience may be improved.

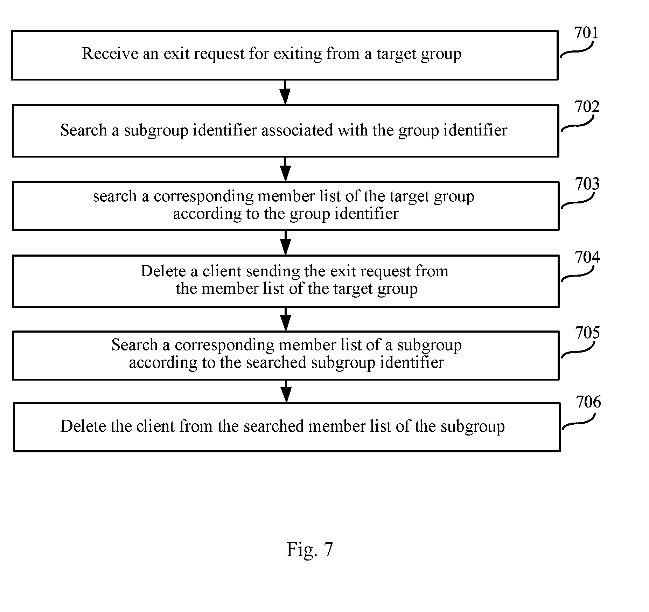

Fig. 7 is a flowchart showing a method for exiting from a group according to an exemplary embodiment. As shown in Fig. 7, the method for exiting from a group is applied in the server 120 of the implementation environment shown in Fig. 1. The method for exiting from a group may include the following steps.

In step 701, an exit request for exiting from a target group is received.

The exit request includes a group identifier of a target group.

In step 702, a subgroup identifier associated with the group identifier is searched for.

Members of the subgroup which the searched subgroup identifier corresponds to constitute a subset of members of the target group.

In step 703, a corresponding member list of the target group is searched for according to the group identifier.

In step 704, a client sending the exit request is deleted from the member list of the target group.

In step 705, a corresponding member list of a subgroup is searched for according to the searched subgroup identifier.

In step 706, the client is deleted from the searched for member list of the subgroup.

To sum up, in the method for exiting from a group provided by the present embodiment, after an exit request for exiting from a target group is received, a subgroup identifier associated with the group identifier of the target group is searched for, a corresponding member list of the target group is searched for according to the group identifier, the client sending the exit request is deleted from the member list of the target group, a corresponding member list of a subgroup is searched for according to the searched for subgroup identifier, and the client is deleted from the searched for member list of the subgroup. Members of the subgroup which the searched for subgroup identifier corresponds to constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

Meanwhile, when the client exits from the target group, it also automatically exits from the subgroup of the target group, and the server does not need to continue sending communication information in the subgroup to the client. Thus, the technical problem in related technologies that the server still sends communication information in the subgroup of the target group to the client and thereby the server resource is wasted is solved. Consequently, effects of saving the server resource may be achieved. Meanwhile, the server does not send the communication information in the subgroup of the target group to the client who has already exited from the target group, leakage of communication information in the subgroup may be avoided and thereby safety of the communication information in the subgroup may be guaranteed.

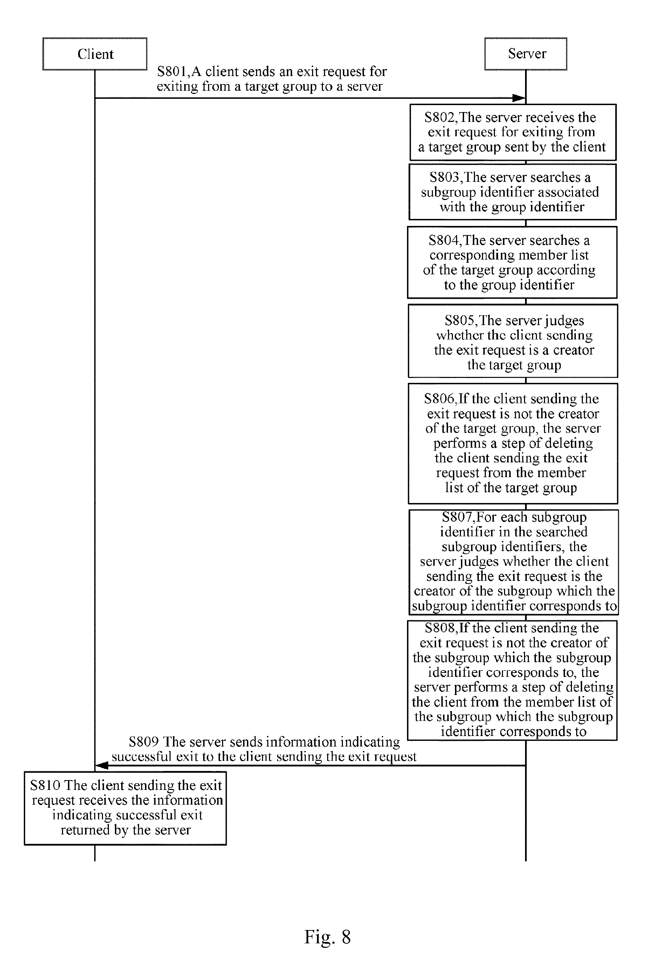

Fig. 8 is a flowchart showing a method for exiting from a group according to an exemplary embodiment. As shown in Fig. 8, the method for exiting from a group is applied in the implementation environment shown in Fig. 1. The method for exiting from a group may include the following steps.

In step 801, a client sends an exit request for exiting from a target group to a server.

When a user in a target group wants to exit, the user may send, by the client used by himself or herself, the exit request for exiting from the target group to the server. The exit request includes a group identifier of the target group.

In step 802, the server receives the exit request for exiting from a target group sent from the client.

In step 803, the server searches for a subgroup identifier associated with the group identifier.

After receiving the exit request, in order to perform subsequent steps, the server may search for the subgroup identifier associated with the group identifier. It may be known according to generation manner of the subgroup identifier that, when the subgroup identifier is associated with the group identifier, a subgroup which the subgroup identifier corresponds to is a subgroup of the target group, and thus members of the subgroup which the searched for subgroup identifier corresponds to constitute a subset of members of the target group.

In step 804, the server searches for a corresponding member list of the target group according to the group identifier.

After receiving the exit request, in order to perform subsequent steps, the server may search for a member list of the target group which the group identifier in the exit request corresponds to.

It shall be noted that the present embodiment is illustrated by taking an example where step 803 is firstly performed and then step 804 is performed. When in actual implementation, the server may perform steps 803 and 804 simultaneously, or step 804 may be firstly performed and then step 803 is performed. The present embodiment does not impose limitations on actual performing sequences of the steps.

In step 805, the server determines whether the client sending the exit request is a creator the target group.

After receiving the exit request, in order to perform subsequent steps, the server may determine whether the client sending the exit request is a creator of the target group. When in actual implementation, in order to indicate which client in the target group requests to exit, the exit request may include identification of the client sending the exit request, and thus the server may determine whether the identification of the client sending the exit request is the identification of the creator of the target group in the member list of the target group. When it is determined that the identification of the client sending the exit request is the identification of the creator of the target group, the server may be informed that the client sending the exit request is the creator of the target group. When it is determined that the identification of the client sending the exit request is not the identification of the creator of the target group, the server may be informed that the client sending the exit request is not the creator of the target group.

In step 806, if the client sending the exit request is not the creator of the target group, the server performs a step of deleting the client sending the exit request from the member list of the target group.

If it is determined that the client sending the exit request is not the creator of the target group, it is indicated that the client sending the exit request is a normal user in the target group, and at this time, the server may directly delete the client from the member list of the target group.

If it is determined that the client sending the exit request is the creator of the target group, then in similar manner with existing groups in which a group is directly collapsed when a host of the group exits, the server collapses the target group; meanwhile, since the target subgroup is associated with the target group, the subgroup in the target subgroup is not worth existing after collapse of the target group, and the server may collapse the subgroup associated with the target group while collapsing the target group, and then the flowchart ends.

In step 807, for each subgroup identifier in the searched subgroup identifiers, the server determines whether the client sending the exit request is the creator of the subgroup which the subgroup identifier corresponds to.

When in actual implementation, the server may determine whether the identification of the client sending the exit request is the identification of the creator of the subgroup which the subgroup identifier corresponds to. When it is determined that the identification of the client sending the exit request is the identification of the creator of the subgroup which the subgroup identifier corresponds to, the server may be informed that the client sending the exit request is the creator of the subgroup which the subgroup identifier corresponds to. When it is determined that the identification of the client sending the exit request is not the identification of the creator of the subgroup which the subgroup identifier corresponds to, the server may be informed that the client sending the exit request is not the creator of the subgroup which the subgroup identifier corresponds to.

It shall be noted that, since the target group may include a plurality of subgroups and a part of the subgroups include the client sending the exit request but other part of subgroups do not include the client sending the exit request, for each subgroup identifier of the searched for subgroup identifiers, the server may firstly determine whether the member list of the subgroup which the subgroup identifier corresponds to includes identification of the client; if it is determined that the identification of the client is included, the server continues to determine whether the client is the creator of the subgroup which the subgroup identifier corresponds to, and detailed descriptions are omitted in the present embodiment.

In step 808, if the client sending the exit request is not the creator of the subgroup which the subgroup identifier corresponds to, the server performs a step of deleting the client from the member list of the subgroup which the subgroup identifier corresponds to.

If it is determined that the client sending the exit request is not the creator of the subgroup which the subgroup identifier corresponds to, then in similar manner with existing groups, the client directly exits from the subgroup, i.e., the server deletes the client from the member list of the subgroup which the subgroup identifier corresponds to.

If it is determined that the client sending the exit request is the creator of the subgroup which the subgroup identifier corresponds to, it is indicated that the client is the host of the subgroup, and then in similar manner with existing groups in which a group is directly collapsed when a host of the group exits, the server collapses the subgroup.

In step 809, the server sends information indicating successful exit to the client sending the exit request.

After performing the above deleting operation, in order to inform that the client sending the exit request has already successfully exited from the target group and the subgroup of the target group, the server may send the information indicating successful exit to the client. The information indicating successful exit indicates that the client has successfully exited from the target group and the subgroup which is created in the target group and includes the client.

In step 810, the client sending the exit request receives the information indicating successful exit returned by the server.

Correspondingly, the client may receive the information indicating successful exit returned by the server, and when the information indicating successful exit is received, the client has already successfully exited form the target group and the subgroup of the target group, and after this, the client will not continue to receive communication information in the target group and communication information in the subgroup of the target group. Thus, that the client continues to suffer from interference of the communication information in the subgroup of the target group after the client has already exited from the target group is avoided, and the user experience is improved.

To sum up, in the method for exiting from a group provided by the present embodiment, a subgroup identifier associated with the group identifier of the target group is searched for after the exit request for exiting from the target group is received, a corresponding member list of the target group is searched for according to the group identifier, the client sending the exit request is deleted from the member list of the target group, a corresponding member list of the subgroup is searched for according to the searched subgroup identifier, and the client is deleted from the member list of the subgroup. Members of the subgroup which the searched for subgroup identifier corresponds to constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

Meanwhile, when the client exits from the target group, it also automatically exits from the subgroup of the target group, and the server does not need to continue sending communication information in the subgroup to the client. Thus, the technical problem in related technologies that the server still sends communication information in the subgroup of the target group to the client and thereby the server resource is wasted is solved. Consequently, effects of saving the server resource may be achieved. Meanwhile, the server does not send the communication information in the subgroup of the target group to the client who has already exited from the target group, leakage of communication information in the subgroup may be avoided and thereby safety of the communication information in the subgroup may be guaranteed.

In the present embodiment, before the client is deleted from the member list of the target group, whether the client is the creator of the target group is firstly detected, and thus the deleting operation is performed only when the detection result is that the client is not the creator of the target group; when the detection result is that the client is the creator of the target group, the target group and the subgroup of the target group are directly collapsed. Thus, a waste of the server resource resulted from the server continuing to send communication information to the subgroup may be avoided. Similarly, before the identification in the member list of the subgroup which the subgroup identifier corresponds to is deleted, whether the client is the creator of the subgroup is firstly detected, and thus the deleting operation is performed only when the client is not the creator of the subgroup; when the client is the creator of the subgroup, the subgroup is directly collapsed. Thus, a waste of the server resource resulted from the server continuing to send communication information to the subgroup may be avoided.

Apparatus embodiments of the present disclosure, which may be configured to perform the method embodiments of the present disclosure, are set forth below. As to the undisclosed details of the apparatus embodiments of the present disclosure, please refer to the method embodiments of the present disclosure.

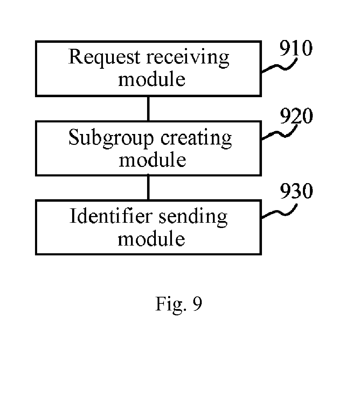

Fig. 9 is a block diagram showing an apparatus for creating a group according to an exemplary embodiment. As shown in Fig. 9, the apparatus for creating a group is applied in the server 120 of the implementation environment shown in Fig. 1. The apparatus for creating a group may include but not limited to: a request receiving module 910, a subgroup creating module 920 and a first identifier sending module 930.

The request receiving module 910 is configured to receive a creating request for creating a target subgroup in which a group identifier of a target group which a client sending the creating request belongs to is carried.

The subgroup creating module 920 is configured to create a target subgroup associated with the target group.

The first identifier sending module 930 is configured to send a subgroup identifier of the target subgroup to members of the target subgroup.

The members of the target subgroup constitute a subset of members of the target group.

To sum up, in the apparatus for creating a group provided by the present embodiment, by receiving a creating request for creating a target subgroup in which a group identifier of a target group which a client sending the creating request belongs to is carried, a target subgroup associated with the target group is created; a subgroup identifier of the target subgroup is sent to members of the target subgroup. The members of the target subgroup constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

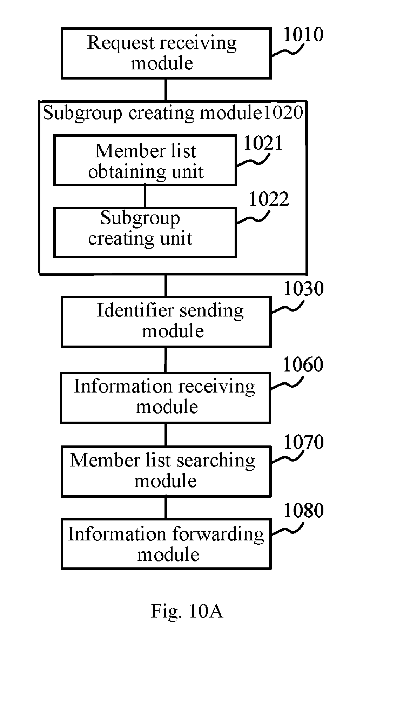

Fig. 10A is a block diagram showing an apparatus for creating a group according to another exemplary embodiment. As shown in Fig. 10A, the apparatus for creating a group is applied in the server 150 of the implementation environment shown in Fig. 1. The apparatus for creating a group may include but not limited to: a request receiving module 1010, a subgroup creating module 1020 and a first identifier sending module 1030.

The request receiving module 1010 is configured to receive a creating request for creating a target subgroup in which a group identifier of a target group which a client sending the creating request belongs to is carried.

The subgroup creating module 1020 is configured to create a target subgroup associated with the target group.

The identifier sending module 1030 is configured to send a subgroup identifier of the target subgroup to members of the target subgroup.

The members of the target subgroup constitute a subset of members of the target group.

In a first possible implementation of the present embodiment, the subgroup creating module 1020 includes:

a member list obtaining unit 1021 configured to obtain a member list carried in the creating request, the member list of the target subgroup including the client sending the creating request; and

a subgroup creating unit 1022 configured to create the target subgroup corresponding to the member list.

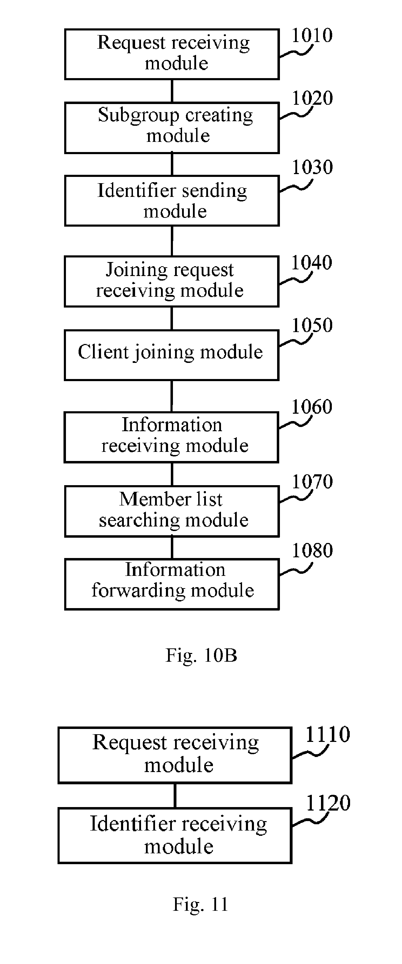

Referring to Fig. 10B, in a second possible implementation of the present embodiment, the apparatus further includes:

a joining request receiving module 1040 configured to receive a joining request for joining clients in the target group into the target subgroup; and

a client joining module 1050 configured to join the clients in the target group into the target subgroup.

In a third possible implementation of the present embodiment, the apparatus further includes:

an information receiving module 1060 configured to receive communication information sent from the members of the target subgroup, the communication information including the subgroup identifier of the target subgroup;

a member list searching module 1070 configured to search for a corresponding member list of the target subgroup according to the subgroup identifier of the target subgroup; and

an information forwarding module 1080 configured to forward the communication information to other members in the member list of the target subgroup searched by the member list searching module than the member sending the communication information.

To sum up, in the apparatus for creating a group provided by the present embodiment, by receiving a creating request for creating a target subgroup in which a group identifier of a target group which a client sending the creating request belongs to is carried, a target subgroup associated with the target group is created; a subgroup identifier of the target subgroup is sent to members of the target subgroup. The members of the target subgroup constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

Fig. 11 is a block diagram showing an apparatus for creating a group according to an exemplary embodiment. As shown in Fig. 11, the apparatus for creating a group is applied in the client 10 of the implementation environment shown in Fig. 1. The apparatus for creating a group may include but not limited to: a request sending module 1110 and an identifier receiving module 1120.

The request sending module 1110 is configured to send a creating request for creating a target subgroup, in which a group identifier of a target group is carried, to a server.

The identifier receiving module 1120 is configured to receive a subgroup identifier of the target subgroup sent from the server.

The target subgroup is associated with the target group which the client belongs to, and members of the target subgroup constitute a subset of members of the target group.

To sum up, in the apparatus for creating a group provided by the present embodiment, by sending a creating request for creating a target subgroup to a server, the server creates the target subgroup after receiving the creating request and returns the generated subgroup identifier to the client, and thereby the client may successfully create the target subgroup after receiving the subgroup identifier. Members of the target subgroup constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

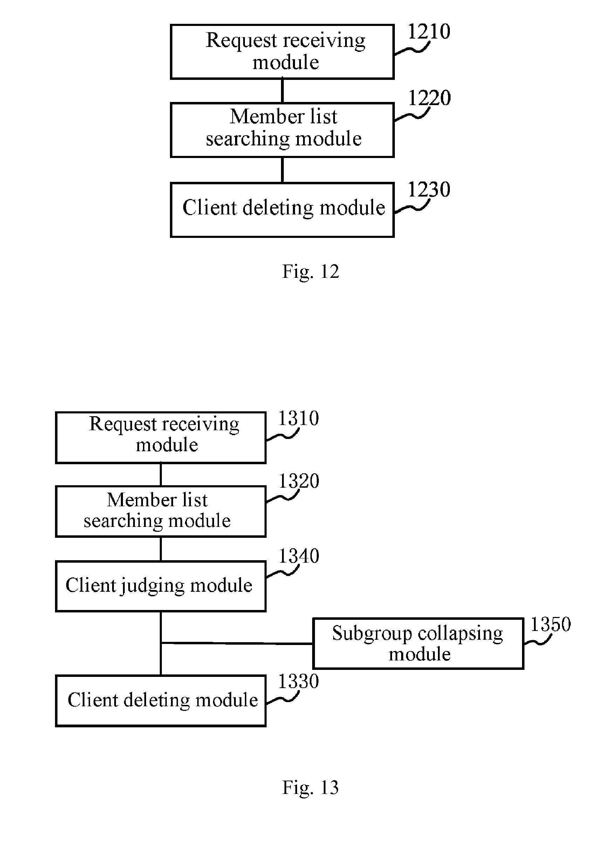

Fig. 12 is a block diagram showing an apparatus for exiting from a group according to an exemplary embodiment. As shown in Fig. 12, the apparatus for exiting from a group is applied in the server 120 of the implementation environment shown in Fig. 1. The apparatus for creating a group may include but not limited to: a request receiving module 1210, a member list searching module 1220 and a client deleting module 1230.

The request receiving module 1210 is configured to receive an exit request for exiting from a target subgroup in which a subgroup identifier of the target subgroup is included.

The member list searching module 1220 is configured to search for a corresponding member list of the target subgroup according to the subgroup identifier of the target subgroup.

The client deleting module 1230 is configured to delete a client sending the exit request from the member list of the target subgroup.

The target subgroup is associated with a target group, and members of the target subgroup constitute a subset of members of the target group.

To sum up, in the apparatus for exiting from a group provided by the present embodiment, by receiving an exit request for exiting from a target subgroup, a corresponding member list of the target subgroup which the subgroup identifier of the target subgroup corresponds to is searched for after the exit request is received, and a client sending the exit request is deleted from the member list of the target subgroup. The exit request includes the subgroup identifier of the target subgroup, and the target subgroup is associated with a target group and members of the target subgroup constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

Subgroup members in the target subgroup may request for exit, thereby avoiding resource consumption of the server for sending communication information to the members, and the communication information is of no value for the members, and the server resource may be further saved. Meanwhile, interference on the members by the communication information may be avoided and thereby the user experience may be improved.

Fig. 13 is a block diagram showing an apparatus for exiting from a group according to an exemplary embodiment. As shown in Fig. 13, the apparatus for exiting from a group is applied in the server 120 of the implementation environment shown in Fig. 1. The apparatus for exiting from a group may include but not limited to: a request receiving module 1310, a member list searching module 1320 and a client deleting module 1330.

The request receiving module 1310 is configured to receive an exit request for exiting from a target subgroup in which a subgroup identifier of the target subgroup is included.

The member list searching module 1320 is configured to search for a corresponding member list of the target subgroup according to the subgroup identifier of the target subgroup.

The client deleting module 1330 is configured to delete a client sending the exit request from the member list of the target subgroup.

The target subgroup is associated with a target group, and members of the target subgroup constitute a subset of members of the target group.

In a possible implementation of the present embodiment, the apparatus includes:

a client determining module 1340 configured to determine whether the client sending the exit request is a creator of the target subgroup; and

a subgroup collapsing module 1350 configured to collapse the target subgroup when it is determined that the client sending the exit request is a creator of the target subgroup;

wherein the client deleting module 1330 is configured to perform a step of deleting the client sending the exit request from the member list of the target subgroup, when it is determined that the client sending the exit request is not a creator of the target subgroup.

To sum up, in the apparatus for exiting from a group provided by the present embodiment, by receiving an exit request for exiting from a target subgroup, a corresponding member list of the target subgroup which the subgroup identifier of the target subgroup corresponds to is searched for after the exit request is received, and a client sending the exit request is deleted from the member list of the target subgroup. The exit request includes the subgroup identifier of the target subgroup, and the target subgroup is associated with a target group and members of the target subgroup constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

Subgroup members in the target subgroup may request for exit, thereby avoiding resource consumption of the server for sending communication information to the members, and the communication information is of no value for the members, and the server resource may be further saved. Meanwhile, interference on the members by the communication information may be avoided and thereby the user experience may be improved.

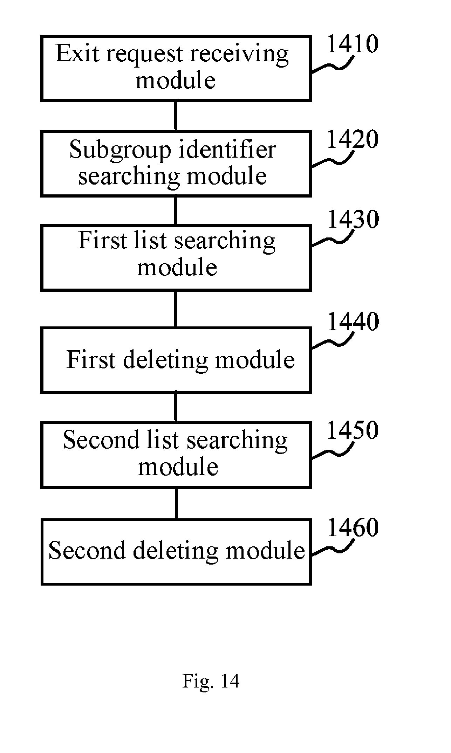

Fig. 14 is a block diagram showing an apparatus for exiting from a group according to an exemplary embodiment. As shown in Fig. 14, the apparatus for exiting from a group is applied in the server 120 of the implementation environment show in fig. 1. The apparatus for exiting from a group may include but not limited to: an exit request receiving module 1410, a subgroup identifier searching module 1420, a first list searching module 1430, a first deleting module 1440, a second list searching module 1450 and a second deleting module 1460.

The exit request receiving module 1410 is configured to receive an exit request for exiting from a target group in which a group identifier of the target group is included.

The subgroup identifier searching module 1420 is configured to search for a subgroup identifier associated with the group identifier. Members of a subgroup which the searched subgroup identifier corresponds to constitute a subset of members of the target group.

The first list searching module 1430 is configured to search a corresponding member list of the target group according to the group identifier.

The first deleting module 1440 is configured to delete a client sending the exit request from the member list of the target group.

The second list searching module 1450 is configured to search a corresponding member list of a subgroup according to the searched for subgroup identifier.

The second deleting module 1460 is configured to delete the client from the searched member list of the subgroup.

To sum up, in the apparatus for exiting from a group provided by the present embodiment, after an exit request for exiting from a target group is received, a subgroup identifier associated with the group identifier of the target group is searched for, a corresponding member list of the target group is searched for according to the group identifier, the client sending the exit request is deleted from the member list of the target group, a corresponding member list of a subgroup is searched for according to the searched subgroup identifier, and the client is deleted from the searched for member list of the subgroup. Members of the subgroup which the searched for subgroup identifier corresponds to constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

Meanwhile, when the client exits from the target group, it also automatically exits from the subgroup of the target group, and the server does not need to continue sending communication information in the subgroup to the client. Thus, the technical problem in related technologies that the server still sends communication information in the subgroup of the target group to the client and thereby the server resource is wasted is solved. Consequently, effects of saving the server resource may be achieved. Meanwhile, the server does not send the communication information in the subgroup of the target group to the client who has already exited from the target group, leakage of communication information in the subgroup may be avoided and thereby safety of the communication information in the subgroup may be guaranteed.

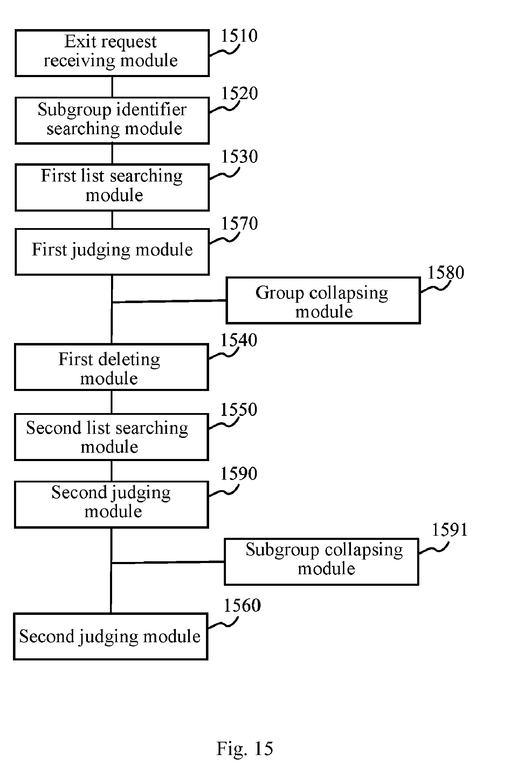

Fig. 15 is a block diagram showing an apparatus for exiting from a group according to an exemplary embodiment. As shown in Fig. 15, the apparatus for exiting from a group is applied in the server 150 of the implementation environment shown in Fig. 1. The apparatus for exiting from a group may include but not limited to: an exit request receiving module 1510, a subgroup identifier searching module 1520, a first list searching module 1530, a first deleting module 1540, a second list searching module 1550 and a second deleting module 1560.

The exit request receiving module 1510 is configured to receive an exit request for exiting from a target group in which a group identifier of the target group is included.

The subgroup identifier searching module 1520 is configured to search for a subgroup identifier associated with the group identifier. Members of a subgroup which the searched subgroup identifier corresponds to constitute a subset of members of the target group.

The first list searching module 1530 is configured to search for a corresponding member list of the target group according to the group identifier.

The first deleting module 1540 is configured to delete a client sending the exit request from the member list of the target group.

The second list searching module 1550 is configured to search for a corresponding member list of a subgroup according to the searched subgroup identifier.

The second deleting module 1560 is configured to delete the client from the searched for member list of the subgroup.

In a first possible implementation of the present embodiment, the apparatus further includes:
a first determining module 1570 configured to determine whether the client sending the exit request is a creator of the target group; and
a group collapsing module 1580 configured to collapse the target group and a subgroup associated with the target group, when it is determined that the client sending the exit request is a creator of the target group;
wherein the first deleting module 1540 is configured to perform a step of deleting the client sending the exit request from the member list of the target group, when it is determined that the client sending the exit request is not a creator of the target group.

In a second possible implementation of the present embodiment, the apparatus further includes:
a second determining module 1590 configured to, for each subgroup identifier in searched for subgroup identifiers, determine whether the client sending the exit request is a creator of a subgroup which the subgroup identifier corresponds to; and
a subgroup collapsing module 1591 configured to collapse the subgroup which the subgroup identifier corresponds to, when it is determined that the client sending the exit request is a creator of a subgroup which the subgroup identifier corresponds to;
wherein the second deleting module 1560 is configured to perform a step of deleting the client from the searched for member list of the subgroup, when it is determined that the client sending the exit request is not a creator of a subgroup which the subgroup identifier corresponds to.

To sum up, in the apparatus for exiting from a group provided by the present embodiment, after an exit request for exiting from a target group is received, a subgroup identifier associated with the group identifier of the target group is searched for, a corresponding member list of the target group is searched for according to the group identifier, the client sending the exit request is deleted from the member list of the target group, a corresponding member list of a subgroup is searched for according to the searched for subgroup identifier, and the client is deleted from the searched for member list of the subgroup. Members of the subgroup which the searched for subgroup identifier corresponds to constitute a subset of members of the target group. Thus, the problem in related technologies that the newly created group may include other members who do not belong to the target group (i.e., the server needs to forward communication information in the newly created group to the other members and thereby the server resource is wasted) is solved. Consequently, effects of saving the server resource may be achieved. Meanwhile, the server does not send the communication information in the newly created group to the other members who do not belong to the target group, leakage of communication information in the newly created group may be avoided and thereby safety of the communication information in the target subgroup may be guaranteed.

Meanwhile, when the client exits from the target group, it also automatically exits from the subgroup of the target group, and the server does not need to continue sending communication information in the subgroup to the client. Thus, the technical problem in related technologies that the server still sends communication information in the subgroup of the target group to the client and thereby the server resource is wasted is solved. Consequently, effects of saving the server resource may be achieved. Meanwhile, the server does not send the communication information in the subgroup of the target group to the client who has already exited from the target group, leakage of communication information in the subgroup may be avoided and thereby safety of the communication information in the subgroup may be guaranteed.

In the present embodiment, before the client is deleted from the member list of the target group, whether the client is the creator of the target group is firstly detected, and thus the deleting operation is performed only when the detection result is that the client is not the creator of the target group; when the detection result is that the client is the creator of the target group, the target group and the subgroup of the target group are directly collapsed. Thus, a waste of the server resource resulted from the server continuing to send communication information to the subgroup may be avoided. Similarly, before the identification in the member list of the subgroup which the subgroup identifier corresponds to is deleted, whether the client is the creator of the subgroup is firstly detected, and thus the deleting operation is performed only when the client is not the creator of the subgroup; when the client is the creator of the subgroup, the subgroup is directly collapsed. Thus, a waste of the server resource resulted from the server continuing to send communication information to the subgroup may be avoided.

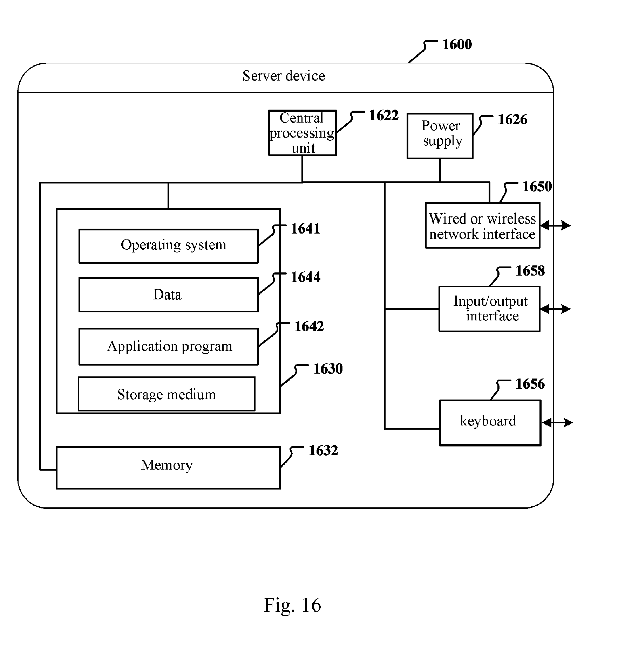

Fig. 16 is a block diagram showing structures of a server according to an embodiment of the present embodiment. The server 1600 may have relatively large differences due to different configurations or performances and may include one or more Central Processing Units (CPUs) 1662 (for example, one or more processors) and a memory 1632, one or more storage mediums 1630 (for example, one or more mass storage devices) for storing application 1642 or data 1644. The memory 1632 and the storage medium 1630 may perform temporary storage or permanent storage. The program stored in the storage medium 1630 may include one or more modules (not shown), and each module may include a series of instruction operations for the server. Further, the CPU 1622 may be configured to communicate with the storage medium 1630, and to perform on the server 1600 a series of instruction operations in the storage medium 1630 so as to complete all or a part of the steps in the above-described server side methods.

The server 1600 may further include one or more power supplies 1626, one or more wired or wireless network interfaces 1650, one or more input/output interfaces 1658, one or more keyboards 1656 and/or one or more operating systems 1641, such as Windows ServerTM, Mac OS XTM, UnixTM, LinuxTM, FreeBSDTM, and the like.

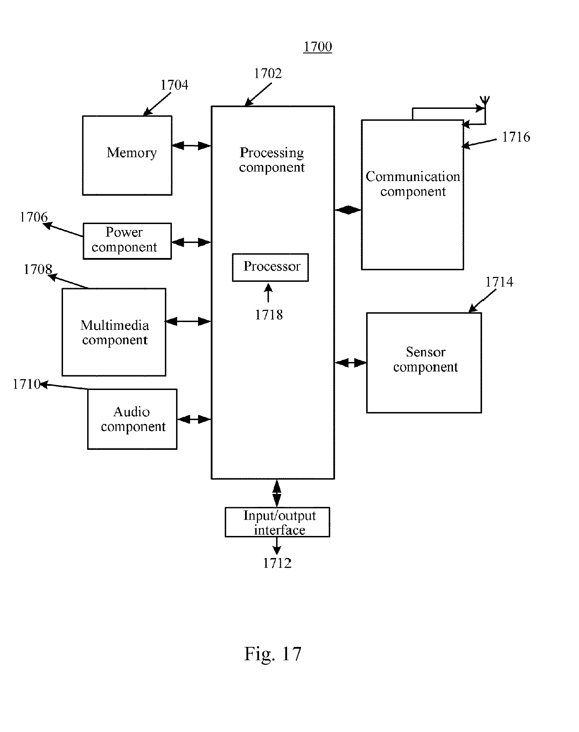

Fig. 17 is a block diagram showing a terminal 1700 according to an exemplary embodiment. The client 110 may be executed in the terminal. For example, the terminal 1700 may be a mobile phone, a computer, a digital broadcast terminal, a messaging device, a gaming console, a tablet, a medical device, exercise equipment, a personal digital assistant, and the like.

Referring to Fig. 17, the termianl 1700 may include one or more of the following components: a processing component 1702, a memory 1704, a power component 1706, a multimedia component 1708, an audio component 1710, an input/output (I/O) interface 1712, a sensor component 1714, and a communication component 1716.

The processing component 1702 typically controls overall operations of the terminal 1700, such as the operations associated with display, telephone calls, data communications, camera operations, and recording operations. The processing component 1702 may include one or more processors 1720 to execute instructions to perform all or part of the steps in the above-described terminal side methods. Moreover, the processing component 1702 may include one or more modules which facilitate the interaction between the processing component 1702 and other components. For instance, the processing component 1702 may include a multimedia module to facilitate the interaction between the multimedia component 1708 and the processing component 1702.

The memory 1704 is configured to store various types of data to support the operation of the terminal 1700. Examples of such data include instructions for any applications or methods operated on the terminal 1700, contact data, phonebook data, messages, pictures, video, and so on. The memory 1704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1706 provides power to various components of the terminal 1700. The power component 1706 may include a power management system, one or more power supplies, one or more power management modes, and other components associated with the generation, management, and distribution of power in the terminal 1700.

The multimedia component 1708 includes a screen providing an output interface between the terminal 1700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1708 includes a front camera and/or a rear camera. The front camera and the rear camera may receive an external multimedia datum while the terminal 1700 is in an operation mode, such as a photographing mode or a video mode. Each of the front camera and the rear camera may be a fixed optical lens system or have focus and optical zoom capability.

The audio component 1710 is configured to output and/or input audio signals. For example, the audio component 1710 includes a microphone (MIC) configured to receive an external audio signal when the terminal 1700 is in an operation mode, such as a call mode, a recording mode, and a voice recognition mode. The received audio signal may be further stored in the memory 1704 or transmitted via the communication component 1716. In some embodiments, the audio component 1710 further includes a speaker to output audio signals.

The I/O interface 1712 provides an interface between the processing component 1702 and peripheral interface modules, such as a keyboard, a click wheel, buttons, and the like. The buttons may include, but are not limited to, a home button, a volume button, a starting button, and a locking button.

The sensor component 1714 includes one or more sensors to provide status assessments of various aspects of the termianl 1700. For instance, the sensor component 1714 may detect an open/closed status of the terminal, relative positioning of components, e.g., the display and the keypad, of the terminal 1700, a change in position of the termianl 1700 or a component of terminal 1700, a presence or absence of user contact with the terminal 1700, an orientation or an acceleration/deceleration of the terminal 1700, and a change in temperature of the terminal 1700. The sensor component 1714 may include a proximity sensor configured to detect the presence of nearby objects without any physical contact. The sensor component 1714 may also include a light sensor, such as a CMOS or CCD image sensor, for use in imaging applications. In some embodiments, the sensor component 1714 may also include an accelerometer sensor, a gyroscope sensor, a magnetic sensor, a pressure sensor, or a temperature sensor. The temperature sensor may be used for sampling temperatures in natural environment and/or human body temperature.

The communication component 1716 is configured to facilitate communication, wired or wirelessly, between the terminal 1700 and other devices. The terminal 1700 can access a wireless network based on a communication standard, such as WiFi, 2G, or 3G, or a combination thereof. In one exemplary embodiment, the communication component 1716 receives a broadcast signal or broadcast associated information from an external broadcast management system via a broadcast channel. In one exemplary embodiment, the communication component 1716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1704, executable by the processor 1720 in the terminal 1700, for performing the above-described client side methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and embodiments be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for exiting from a group, **characterized in that** the method is applied in a server and the method comprises:
receiving (501) an exit request for exiting from a target subgroup in which a subgroup identifier of the target subgroup is included;
searching (502) for a corresponding member list of the target subgroup according to the subgroup identifier of the target subgroup; and
deleting (503) a client sending the exit request from the member list of the target subgroup;
wherein the target subgroup is associated with a target group, and members of the target subgroup constitute a subset of members of the target group.

2. The method according to claim 1, **characterized in that** the method further comprises:
determining whether the client sending the exit request is a creator of the target subgroup;
if it is determined that the client sending the exit request is a creator of the target subgroup, collapsing the target subgroup; and
if it is determined that the client sending the exit request is not a creator of the target subgroup, performing a step of deleting the client sending the exit request from the member list of the target subgroup.

3. A method for exiting from a group, **characterized in that** the method is applied in a server and the method comprises:
receiving (701) an exit request for exiting from a target group in which a group identifier of the target group is included;
searching (702) for a subgroup identifier associated with the group identifier, members of a subgroup which the searched for subgroup identifier corresponds to constituting a subset of members of the target group;
searching (703) for a corresponding member list of the target group according to the group identifier;
deleting (704) a client sending the exit request from the member list of the target group;
searching (705) for a corresponding member list of a subgroup according to the searched for subgroup identifier; and
deleting (706) the client from the searched member list of the subgroup.

4. The method according to claim 3, **characterized in that** the method further comprises:
determining whether the client sending the exit request is a creator of the target group;
if it is determined that the client sending the exit request is a creator of the target group, collapsing the target group and a subgroup associated with the target group; and
if it is determined that the client sending the exit request is not a creator of the target group, performing a step of deleting the client sending the exit request from the member list of the target group.

5. The method according to claim 3 or 4, **characterized in that** the method further comprises:
for each subgroup identifier of the searched for subgroup identifiers, determining whether the client sending the exit request is a creator of a subgroup which the subgroup identifier corresponds to;
if it is determined that the client sending the exit request is a creator of a subgroup which the subgroup identifier corresponds to, collapsing the subgroup which the subgroup identifier corresponds to; and
if it is determined that the client sending the exit request is not a creator of a subgroup which the subgroup identifier corresponds to, performing a step of deleting the client from the searched member list of the subgroup.

6. An apparatus for exiting from a group, **characterized in that** the apparatus is applied in a server and the apparatus comprises:
a request receiving module (1210) configured to receive an exit request for exiting from a target subgroup in which a subgroup identifier of the target subgroup is included;
a member list searching module (1220) configured to search for a corresponding member list of the target subgroup according to the subgroup identifier of the target subgroup; and
a client deleting module (1230) configured to delete a client sending the exit request from the member list of the target subgroup;
wherein the target subgroup is associated with a target group, and members of the target subgroup constitute a subset of members of the target group.

7. The apparatus according to claim 6, **characterized in that** the apparatus comprises:
a client determining module configured to determine whether the client sending the exit request is a creator of the target subgroup; and
a subgroup collapsing module configured to collapse the target subgroup when it is determined that the client sending the exit request is a creator of the target subgroup;
wherein the client deleting module is configured to perform a step of deleting the client sending the exit request from the member list of the target subgroup, when it is determined that the client sending the exit request is not a creator of the target subgroup.

8. An apparatus for exiting from a group, **characterized in that** the apparatus is applied in a server and the apparatus comprises:
an exit request receiving module (1410) configured to receive an exit request for exiting from a target group in which a group identifier of the target group is included;
a subgroup identifier searching module (1420) configured to search for a subgroup identifier associated with the group identifier, members of a subgroup which the searched for subgroup identifier corresponds to constituting a subset of members of the target group;
a first list searching module (1430) configured to search for a corresponding member list of the target group according to the group identifier;
a first deleting module (1440) configured to delete a client sending the exit request from the member list of the target group;
a second list searching module (1450) configured to search for a corresponding member list of a subgroup according to the searched for subgroup identifier; and
a second deleting module (1460) configured to delete the client from the searched member list of the subgroup.

9. The apparatus according to claim 8, **characterized in that** the apparatus further comprises:
a first determining module configured to determine whether the client sending the exit request is a creator of the target group; and
a group collapsing module configured to collapse the target group and a subgroup associated with the target group, when it is determined that the client sending the exit request is a creator of the target group;
wherein the first deleting module is configured to perform a step of deleting the client sending the exit request from the member list of the target group, when it is determined that the client sending the exit request is not a creator of the target group.

10. The apparatus according to claim 8 or 9, **characterized in that** the apparatus further comprises:
a second determining module configured to, for each subgroup identifier of the searched for subgroup identifiers, determine whether the client sending the exit request is a creator of a subgroup which the subgroup identifier corresponds to; and
a subgroup collapsing module configured to collapse the subgroup which the subgroup identifier corresponds to, when it is determined that the client sending the exit request is a creator of a subgroup which the subgroup identifier corresponds to;
wherein the second deleting module is configured to perform a step of deleting the client from the searched member list of the subgroup, when it is determined that the client sending the exit request is not a creator of a subgroup which the subgroup identifier corresponds to.

11. An apparatus for exiting from a group according to claim 6 in which the modules are implemented in software, **characterized in that** the apparatus comprises:
a processor (1718); and
a memory (1704) for storing instructions executable by the processor;
wherein the processor is configured to:
receive an exit request for exiting from a target subgroup in which a subgroup identifier of the target subgroup is included;
search for a corresponding member list of the target subgroup according to the subgroup identifier of the target subgroup; and
delete a client sending the exit request from the member list of the target subgroup;
wherein the target subgroup is associated with a target group, and members of the target subgroup constitute a subset of members of the target group.

12. An apparatus for exiting from a group according to claim 8 in which the modules are implemented in software, **characterized in that** the apparatus comprises:
a processor (1718); and
a memory (1704) for storing instructions executable by the processor;
wherein the processor is configured to:
receive an exit request for exiting from a target group in which a group identifier of the target group is included;
search for a subgroup identifier associated with the group identifier, members of a subgroup which the searched for subgroup identifier corresponds to constituting a subset of members of the target group;
search for a corresponding member list of the target group according to the group identifier;
delete a client sending the exit request from the member list of the target group;
search for a corresponding member list of a subgroup according to the searched subgroup identifier; and
delete the client from the searched member list of the subgroup.

13. A computer program which, when executed on a processor of an apparatus, performs a method according to any one of claims 1 to 5.
